(19) Europäisches Patentamt / European Patent Office / Office européen des brevets

(11) **EP 1 327 314 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(21) Anmeldenummer: **01987973.3**

(22) Anmeldetag: **12.10.2001**

(51) Int Cl.:
**H04B 7/06** $^{(2006.01)}$

(86) Internationale Anmeldenummer:
**PCT/DE2001/003923**

(87) Internationale Veröffentlichungsnummer:
**WO 2002/033850 (25.04.2002 Gazette 2002/17)**

(54) **STRAHLFORMUNGSVERFAHREN**

BEAM-SHAPING METHOD

PROCEDE POUR FORMER DES FAISCEAUX

(84) Benannte Vertragsstaaten:
**DE ES FR GB IT**

(30) Priorität: **16.10.2000 DE 10051133**

(43) Veröffentlichungstag der Anmeldung:
**16.07.2003 Patentblatt 2003/29**

(73) Patentinhaber: **Nokia Siemens Networks GmbH & Co. KG**
**81541 München (DE)**

(72) Erfinder: **HAARDT, Martin**
**98716 Geraberg (DE)**

(56) Entgegenhaltungen:
**DE-A- 19 803 188    US-A- 5 886 988**

**Beschreibung**

Die Erfindung betrifft ein Strahlformungsverfahren.

Bei den in dieser Anmeldung beschriebenen Ausgestaltungen des Strahlformungsverfahrens werden Kovarianzmatrizen für alle hinreichend starken Taps eines Funksignals einzeln berechnet, Eigenvektoren und Eigenwerte der so erhaltenen Kovarianzmatrizen werden berechnet, und die Eigenvektoren, die den stärksten Eigenwerten entsprechen, werden für die Strahlformung herangezogen.

Die Zahl der Eigenvektoren, die bei der Strahlformung praktisch einsetzbar ist, ist begrenzt. Die Gründe dafür sind unterschiedlicher Art.

Bei einem Verfahren wie mit Bezug auf Fig. 4 der Patentanmeldung DE 10032426.6 beschrieben liegt ein Problem in der beschränkten Bandbreite, die für die Rückübertragung von die Empfangssituation beschreibender Information von der Teilnehmerstation an die Basisstation zur Verfügung steht, und die auf die Übertragung von Komponenten der gemessenen, über längere Zeitspannen gültigen bzw. brauchbaren Eigenvektoren einerseits und einer geewünschten kurzfristigen Gewichtung dieser Eigenvektoren im Downlink-Signal andererseits aufgeteilt werden muß. Dies zwingt dazu, sich im Interesse einer schnellen Aktualisierung der Gewichtung auf die Übertragung nur der wichtigsten Eigenvektoren zu beschränken.

Bei dem mit Bezug auf Fig. 5 der Patentanmeldung DE 10032426.6 beschrieben Verfahren setzt die Basisstation zum Ausstrahlen eine Linearkombination von Eigenvektoren als Gewichtungsvektoren ein. Je größer die Zahl der verwendeten Eigenvektoren ist, um so größer ist die Zahl der mit dem Funksignal versorgten Ausbreitungswege, sowohl zu der Teilnehmerstation, für die das Signal bestimmt ist, als auch zu anderen, für die das Signal eine Störung darstellt. Um diese Störungen in Grenzen zu halten, muß die Zahl der in die Linearkombination eingehenden Eigenvektoren begrenzt werden.

Aus US 5886988 ist ein Strahlformungsverfahren bekannt.

Aufgabe der Erfindung ist, ein Strahlformungsverfahren anzugeben, bei dem auch bei einer beschränkten Zahl von gleichzeitig berücksichtigten Eigenvektoren eine höchstmögliche Sicherheit gegen Fading-Ausfälle erreicht wird.

Diese Aufgabe wird durch das Verfahren mit den Merkmalen des Patentanspruchs 1 gelöst.

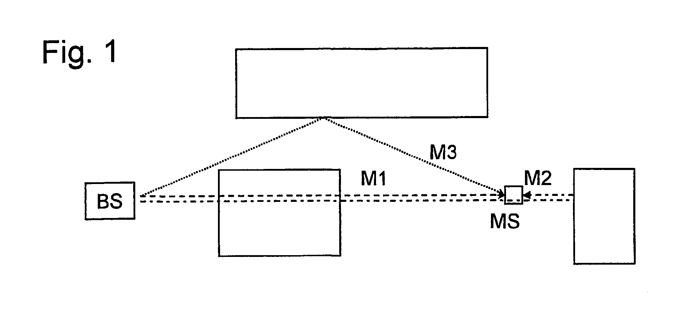

Die Erfindung beruht auf der Erkenntnis, daß die Begrenzung der Zahl von Eigenvektoren unter bestimmten Ausbreitungsbedingungen zu Problemen (Canyon-Effekt) führen kann, wie Fig. 1 zeigt. Diese Figur veranschaulicht die Übertragungsverhältnisse, wie sie z. B. in den Straßenschluchten einer Großstadt leicht auftreten können. Ein direkter Übertragungsweg (Lineofsight-Weg) zwischen der Basisstation BS und einer Teilnehmerstation MS existiert nicht. Es gibt drei indirekte Übertragungswege M1, M2, M3, von denen die Übertragungswege M1, M2 teilweise deckungsgleich sind.

Die Basisstation BS hat eine adaptive Antenne mit M Elementen, und es wird angenommen, daß die Zahl von Eigenvektoren, die die Basisstation BS bei der Strahlformung berücksichtigt, auf zwei begrenzt ist.

Wenn die Basisstation BS das mit Bezug auf Fig. 5 der Patentanmeldung 10032426.6 beschriebene Verfahren ausführt, so besteht die Möglichkeit, daß den Übertragungswegen M1, M2 jeweils die stärksten Eigenwerte entsprechen, und daß folglich die Basisstation bei der Strahlformung eine Linearkombination der diesen zwei Ausbreitungswegen entsprechenden Eigenvektoren verwendet. Sie erzeugt in einem solchen Fall zwei Strahlen, die von der Basisstation aus in die gleiche Richtung laufen. Durch die teilweise Deckungsgleichheit der Ausbreitungswege ergibt sich zwangsläufig eine Korrelation zwischen ihnen, d. h. wenn einer von ihnen eine Auslöschung erfährt, so ist die Wahrscheinlichkeit einer Auslöschung für den zweiten, und damit die Wahrscheinlichkeit, daß keine Kommunikation mehr zwischen Basisstation und Teilnehmerstation möglich ist, erhöht.

Ein ähnliches Problem besteht auch bei dem mit Bezug auf Fig. 4 der Patentanmeldung 10032426.6 beschriebenen Verfahren. Hier werden die den Ausbreitungswegen M1, M2 entsprechenden Eigenvektoren nicht gleichzeitig, sondern nacheinander verwendet. Aber auch hier ist die Gefahr, daß beide Ausbreitungswege M1, M2 gleichzeitig von einer Auslöschung betroffen sind, höher als bei zwei nicht überlappenden Ausbreitungswegen wie etwa M1 und M3.

Um dieses Problem zu beseitigen, wird ein Verfahren zur Strahlformung in einem Funk-Kommunikationssystem vorgeschlagen, wobei das Funk-Kommunikationssystem Teilnehmerstationen und eine Basisstation, die eine Antenneneinrichtung mit mehreren Antennenelementen aufweist, die ein Downlink-Signal jeweils gewichtet mit Koeffizienten $w_i$, i=1, ..., M eines aktuellen Gewichtungsvektors w abstrahlen, umfaßt, bei dem in einer Initialisierungsphase eine Mehrzahl von ersten Gewichtungsvektoren $w^{(j)}$ ermittelt werden, und in einer Arbeitsphase der für die Ausstrahlung eines Zeitschlitzes des für die Teilnehmerstation (MSk) bestimmten Downlink-Signals verwendete aktuelle Gewichtungsvektor w anhand der ermittelten ersten Gewichtungsvektoren zyklisch neu festgelegt wird, wobei die Ermittlung der ersten Gewichtungsvektoren $w^{(j)}$ unter der Maßgabe erfolgt, daß sie alle zueinander orthogonal sind.

Eine besonders einfache Möglichkeit, die Orthogonalität der ermittelten ersten Gewichtungsvektoren sicherzustellen ist, eine einzige erste räumliche Kovarianzmatrix aufzustellen, die sich aus Beiträgen von für die einzelnen Taps des Uplink- oder Downlink-Signals ermittelten kurzfristigen Kovarianzmatrizen zusammensetzt, und die ersten Gewichtungsvektoren unter deren Eigenvektoren auszuwählen. Insbesondere kann diese erste Kovarianzmatrix durch eine Mittelwertbildung über die für die einzelnen Taps erhaltenen kurzfristigen Kovarianzmatrizen gewonnen werden. Da diese erste räumliche Kovarianz nur langsam veränderlich ist, kann sie im Gegensatz zu den kurzfristigen Kovarianzmatrizen auch als "langfristige" Kovarianzmatrix bezeichnet werden. Da die Eigenvektoren einer Kovarianzmatrix orthogonal sind, ergibt sich somit bei Berücksichtigung nur einer einzigen ersten räumlichen Kovarianzmatrix die gewünschte Orthogonalität von selbst.

Zweckmäßigerweise werden die kurzfristigen Kovarianzmatrizen für die Bestimmung der ersten räumlichen Kovarianzmatrix überdies zeitlich gemittelt. So können die kurzfristigen Kovarianzmatrizen gleichzeitig als zweite räumliche Kovarianzmatrizen im Sinne der Patentanmeldung 10032426.6 eingesetzt werden.

Ein Ausführungsbeispiel wird nachfolgend anhand der Zeichnung näher erläutert. Es zeigen:

Fig. 1 eine typische Anwendungsumgebung des erfindungsgemäßen Verfahrens;

Fig. 2 ein Flußdiagramm des erfindungsgemäßen Verfahrens nach einer ersten Ausgestaltung; und

Fig. 3 ein Flußdiagramm des erfindungsgemäßen Verfahrens nach einer zweiten Ausgestaltung.

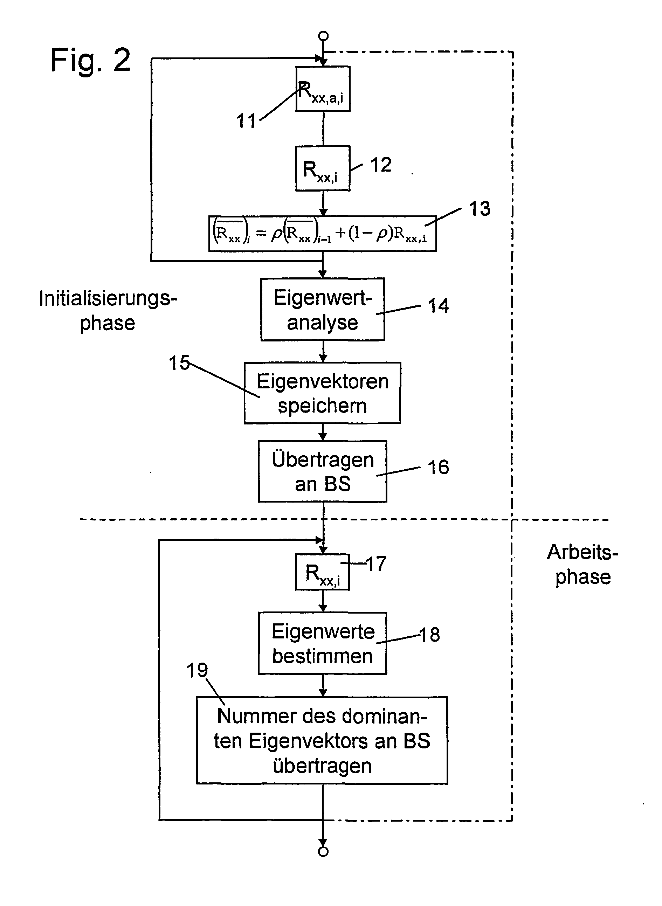

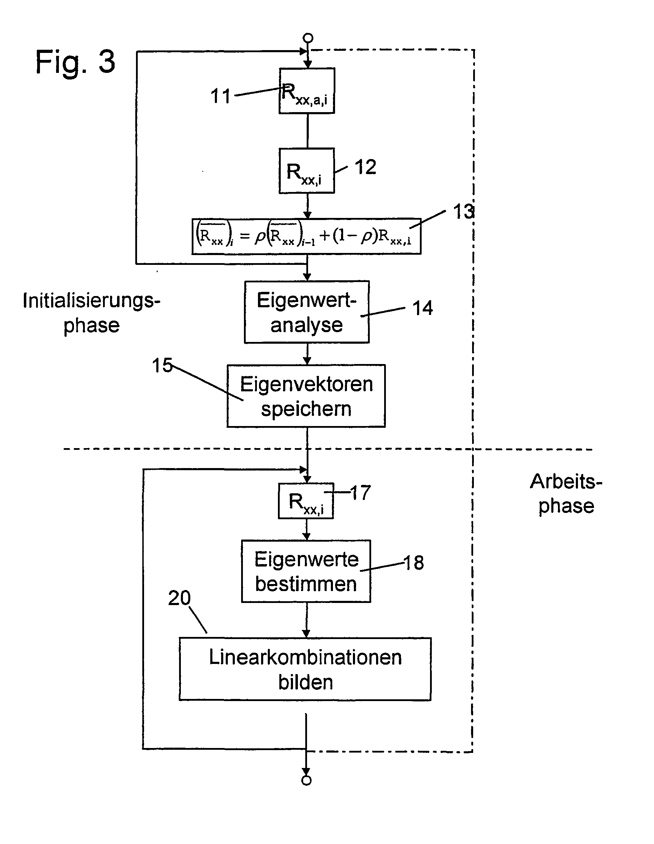

Aufbau einer Basisstation und einer Teilnehmerstation, die geeignet sind, das erfindungsgemäße Verfahren auszuführen, sind in der Patentanmeldung 10032426.6 mit Bezug auf Figs. 2 und 3 beschrieben worden; die Beschreibung wird daher hier nicht wiederholt.

Die erste Ausgestaltung des Verfahrens wird mit Bezug auf Fig. 2 beschrieben.

In einer Initialisierungsphase ermittelt der Signalprozessor SP der Teilnehmerstation MS in Schritt 11 anhand von in einem i-ten Zeitschlitz des Downlink-Signals übertragenen Trainingssequenzen für jeden Tap des Downlink-Signals einzeln die Impulsantworten eines jeden Antennenelements $AE_1$, ..., $AE_M$. (Dabei ist unter "jedem"' Tap natürlich nicht die Gesamtheit aller Beiträge im empfangenen Signal zu verstehen, die eventuell detektierbar wären, sondern nur alle diejenigen, die der Empfänger der Teilnehmerstation tatsächlich zu erfassen und zu isolieren vermag, oder auch nur diejenigen, die eine ausreichende Signalstärke aufweisen, so daß ihre Auswertung die Sicherheit der Symbolschätzung zu verbessern vermag.) Diese Impulsantworten fügt der Signalprozessor SP in der z.B. aus der zitierten DE 198 03 188 bekannten Weise zu räumlichen Kovarianzmatrizen $R_{xx,a,i}$ zusammen, wobei a einen Index eines Taps bezeichnet. Diese räumlichen Kovarianzmatrizen $R_{xx,a,i}$ werden an eine Recheneinheit RE geliefert.

Die Recheneinheit RE bildet in Schritt 12 einen Mittelwert $R_{xx,i}$ der vom Signalprozessor SP zum i-ten Zeitschlitz gelieferten Kovarianzmatrizen $R_{xx,a,i}$, indem sie sie addiert und das Ergebnis durch die Zahl der Taps dividiert. (Da es für die Zwecke des Verfahrens lediglich auf die Proportionen der Koeffizienten dieser gemittelten Matrix ankommt, kann der Divisionsschritt auch entfallen.) Die so erhaltene Matrix wird als kurzfristige oder zweite räumliche Kovarianzmatrix bezeichnet.

In Schritt 13 bildet die Recheneinheit RE eine Folge von zeitlichen Mittelwerten $\overline{R_{xx\,i}}$ der kurzfristigen Kovarianzmatrizen gemäß folgender Formel:

$$\left(\overline{R_{xx}}\right)_i = \rho\left(\overline{R_{xx}}\right)_{i-1} + (1-\rho)R_{xx,i}$$

für alle i>1,

$$\left(\overline{R_{xx}}\right)_0 = R_{xx,i}\ ,$$

wobei $(\overline{R_{xx}})_i$ jeweils die i-te gemittelte Kovarianzmatrix bezeichnet, $R_{xx,i}$ die i-te aktuelle Kovarianzmatrix bezeichnet und p ein Maß für die Zeitkonstante der Mittelwertbildung mit einem Wert zwischen 0 und 1 darstellt.

Die Schritte 11 bis 13 werden eine vorgegebene Zahl z von Malen wiederholt, um eine zeitliche Mittelung über einen aussagekräftigen Zeitraum zu erhalten, in dem sich durch schnelles Fading bedingte Schwankungen der Kanalabschätzung im wesentlichen herausmitteln. Dieser Zeitraum kann in der Größenordnung von Minuten liegen. Dabei ist p so gewählt, daß der Beitrag von $R_{xx,0}$ zum Mittelwert $(\overline{R_{xx}})$ = gegenüber dem von $R_{xx,z}$ nicht vernachlässigbar ist. Der Mittelwert $(\overline{Rxx})$ = wird im folgenden als erste oder langfristige räumliche Kovarianzmatrix bezeichnet.

Eine Analyse der Eigenwerte und Eigenvektoren der ersten Kovarianzmatrix $(\overline{R_{xx}})$ = schließt sich an (Schritt 14).

Die Analyse kann sich auf sämtliche Eigenvektoren und -werte der Kovarianzmatrix $(\overline{R_{xx}})$ = erstrecken, in dem hier betrachteten Fall ermittelt eine Kontrolleinheit KE unter den bei der Analyse gefundenen Eigenvektoren eine begrenzte Zahl, z.B. 2 oder 4, die die Eigenwerte mit den höchsten Beträgen aufweisen, und die folglich den Übertragungswegen mit der geringsten Dämpfung entsprechen. Alternativ kann ein Verfahren zur Eigenvektoranalyse eingesetzt werden, das die Eigenvektoren der ersten räumlichen Kovarianzmatrix $(\overline{R_{xx}})$ = in der Reihenfolge abnehmender Beträge der Eigenwerte liefert, und das abgebrochen wird, wenn die begrenzte Zahl von Eigenvektoren ermittelt ist. Informationstheoretische Verfahren, die zum Bestimmen der dominanten Eigenvektoren einer Kovarianzmatrix verwendbar sind, sind z. B. in dem Aufsatz von M. Wax und T. Kailath, "Detection of signals by information theoretic criteria" beschrieben.

Die Koeffizienten der ermittelten Eigenvektoren $w^{(k,1)}$, $w^{(k,2)}$, ... werden an der Teilnehmerstation MS gespeichert (Schritt 15) und mit dem von der Sprachverarbeitungseinheit SSV kommenden Nutzdatenstrom kombiniert und über die Antenne an die Basisstation übertragen (Schritt 16), um dort als erste Gewichtungsvektoren für die Strahlformung eingesetzt zu werden. Die Basisstation empfängt sie und speichert sie in ihrer Speichereinheit SE zur Verwendung als Koeffizienten für die Multiplizierer M des Strahlformungsnetzes.

Da diese Eigenvektoren $w^{(k,1)}$, $w^{(k,2)}$, ... jeweils aus einer einzigen zweiten Kovarianzmatrix erhalten wurden, sind sie orthogonal; die ihnen entsprechenden Übertragungswege haben unterschiedliche Eintreffrichtungen an der Basisstation BS und sind unkorreliert.

Nun geht die Recheneinheit RE in eine Arbeitsphase über, in der sie aus den vom Signalprozessor SP für jeden Tap und jeden Zeitschlitz gelieferten Kovarianzmatrizen weiterhin wie oben beschrieben kurzfristige Kovarianzmatrizen bildet (Schritt 17), und diese mit jedem der in der Speichereinheit gespeicherten, an die Basisstation übertragenen Eigenvektoren multipliziert, um die Eigenwerte dieser Vektoren für die betreffende kurzfristige Kovarianzmatrix $R_{xx,i}$ zu ermitteln (Schritt 18). Die Nummer des Eigenvektors, der den größeren Eigenwert aufweist, wird im Schritt 19 über die Kontrolleinheit KE an die Basisstation übermittelt. Dieser Eigenvektor wird als der dominierende Eigenvektor bezeichnet, denn er liefert den stärksten und in der Regel besten Beitrag zum Empfangssignal. Wenn lediglich zwei ermittelte Eigenvektoren im Speicherelement SE gespeichert sind und an die Basisstation übertragen worden sind, genügt ein Bit, um den Eigenvektor mit dem jeweils größeren Eigenwert zu bezeichnen. Folglich kann, wenn pro Zeitschlitz ein Bit für die Rückmeldung der Empfangseigenschaften an die Basisstation zur Verfügung steht, der von der Basisstation zur Strahlformung verwendete Vektor in jedem Zeitschlitz aktualisiert und für die Strahlformung im darauffolgenden Zeitschlitz verwendet werden.

Wenn vier Eigenwerte an die Basisstation übermittelt worden sind, sind zwei Bits zur Bezeichnung des jeweils dominierenden Eigenvektors erforderlich. Wenn ein Bit pro Zeitschlitz für die Rückübertragung der Empfangseigenschaften zur Verfügung steht, sind daher zwei Zeitschlitze erforderlich, um die vollständige Bezeichnung des dominierenden Vektors zu übertragen. Dieser wird folglich für die zwei auf seiner Übertragung folgenden Zeitschlitze für die Strahlformung genutzt; im Laufe dieser zwei Zeitschlitze wird die Bezeichnung des anschließend zu verwendenden Eigenvektors übertragen.

Die Schritte der Arbeitsphase können viele Male zyklisch wiederholt werden, bevor die Initialisierungsphase erneut durchgeführt werden muß, um die Koeffizienten der Eigenvektoren zu aktualisieren.

Vorzugsweise werden die Schritte beider Phasen zeitlich verschränkt ausgeführt. Dies bedeutet: eine kurzfristige Kovarianzmatrix wird sowohl zur Berechnung einer ersten räumlichen Kovarianzmatrix, die zu einem späteren Zeitpunkt von der Teilnehmerstation MS an die Basisstation übertragen werden wird, als auch zur Berechnung der Eigenwerte eingesetzt, anhand derer die Teilnehmerstation unter den aus einer früheren ersten räumlichen Kovarianzmatrix ermittelten und an die Basisstation übermittelten Eigenvektoren den dominierenden auswählt; mit andern Worten: die Schritte 12 und 17 sind ein einziger Schritt, dessen Ergebnisse einerseits in den Schritten 13 ff. und andererseits 18 ff. in unterschiedlicher Weise ausgewertet werden.

Die Übertragung der Eigenvektoren von der Teilnehmerstation an die Basisstation kann in festgelegten, vorgegebenen Zeitabständen erfolgen. Flexibler jedoch ist eine Variante des oben beschriebenen Verfahrens, bei der die Eigenvektoranalyse an den gemittelten Kovarianzmatrizen $(\overline{R_{xx}})_i$ in kurzen Zeitabständen, z B. entsprechend der Halbwertszeit der Mittelung, wiederholt wird, die so erhaltenen Eigenvektoren mit den bisher verwendeten verglichen werden und neue Eigenvektoren an die Basisstation nur dann übertragen werden, wenn die Winkel zwischen bisherigen und neuen Eigenvektoren einen Grenzwert überschreiten.

Wenn zu Beginn einer Übertragungsverbindung zwischen Teilnehmerstation MS und Basisstation BS noch keine gemittelte Kovarianzmatrix $(\overline{R_{xx}})_i$ zur Verfügung steht, an der eine Eigenwertanalyse vorgenommen werden könnte, so sind dennoch bereits Daten zu übertragen. In dieser frühen Phase der Übertragungsverbindung werden anstelle von ermittelten Eigenvektoren vorab festgelegte erste Gewichtungsvektoren zum Gewichten des Downlink-Signals verwendet. Die Zahl dieser vorab festgelegten ersten Gewichtungsvektoren ist gleich der Zahl der später ermittelten Eigenvektoren und nicht größer als die der Zahl der Antennenelemente der Basisstation. Die vorab festgelegten ersten Gewichtungsvektoren bilden einen orthonormales System, insbesondere kann es sich um einen Satz von Vektoren der Form (1,0, 0, ...) (0,1, 0, ...), (0,0, 1, 0, ...) handeln. Eine solche Wahl der vorab festgelegten Gewichtungsvektoren bedeutet, daß jeder vorab festgelegte Gewichtungsvektor der Beaufschlagung eines einzigen Antennenelementes mit dem Downlink-Signal entspricht. Durch Übertragen einer Bezeichnung eines Gewichtungsvektors an die Basisstation hat die Teilnehmerstation somit die Möglichkeit, zu bestimmen, welches der mehreren Antennenelemente zum Ausstrahlen des für sie bestimmten Downlink-Signals verwendet wird.

Eine zweite Ausgestaltung des erfindungsgemäßen Verfahrens wird mit Bezug auf Figur 3 beschrieben. Diese Ausgestaltung eignet sich, wie im folgenden deutlich wird, besonders zur Anwendung bei einem Funk-Kommunikationssystem, bei dem Uplink und Downlink jeweils die gleiche Frequenz verwenden, d. .h einem TDD-System. Bei dieser Ausgestaltung werden die ersten Gewichtungsvektoren anhand von Messungen der Uplink-Übertragung von einer Teilnehmerstation MS zur Basisstation BS ermittelt. Die Basisstation BS ist zu diesem Zweck wie die Teilnehmerstation im Falle des oben mit Bezug auf Fig. 2 beschriebenen Verfahrens mit einem Signalprozessor SP zum Erzeugen von Kovarianzmatrizen $R_{xx,a,i}$, jeweils für einen Tap und einen Zeitschlitz des Uplink-Signals, einer Recheneinheit RE, einem Speicherelement SE etc. ausgestattet.

Die vom Signalprozessor SP in Schritt 11 erzeugten räumlichen Kovarianzmatrizen $R_{xx,a,i}$ werden an die Recheneinheit RE geliefert, die, wie oben mit Bezug auf die erste Ausgestaltung beschrieben, daraus in den Schritten 12, 13 kurzfristige räumliche Kovarianzmatrizen $R_{xx,i}$ bildet, deren gleitenden Mittelwert bildet und in Schritt 14 eine Eigenwert- und Eigenvektoranalyse an der durch die Mittelung erhaltenen ersten, langfristigen räumlichen Kovarianzmatrix $(\overline{R_{xx}})=$ vornimmt.

Diese Eigenvektoren entsprechen jeweils Übertragungswegen und enthalten die Information über die relativen Phasenlagen des entsprechenden Beitrags des Uplink-Signals an den einzelnen Antennenelementen und damit über die Richtung, aus der der Beitrag empfangen wird. Wenn, wie bei einem TDD-Funk-Kommunikationssystem, die Frequenzen von Uplink und Downlink gleich sind, können die in dem Eigenvektor enthaltenen Phaseninformationen direkt für die Gewichtung des Downlink-Signals genutzt werden. Falls die Frequenzen von Uplink und Downlink unterschiedlich sind, so ist es erforderlich, die in dem Eigenvektor enthaltene Phaseninformation unter Zugrundelegung der Uplink-Frequenz in eine entsprechende Richtung und diese Richtung anhand der Downlink-Frequenz wieder in Phaseninformation umzurechnen, um für die Strahlformung im Downlink geeignete Eigenvektoren zu erhalten.

Die weiteren Schritte des Verfahrens bis einschließlich Schritt 18 entsprechen wiederum denen der ersten Ausgestaltung, mit dem Unterschied, daß die gesamte Verarbeitung an der Basisstation BS stattfindet und auf am Uplink-Signal vorgenommenen Messungen basiert, weswegen auch der Übertragungsschritt 16 entfällt.

Bei einer ersten, einfachen Variante der zweiten Ausgestaltung schließt sich an die Eigenwertbestimmung in Schritt 18 ein Schritt 20 an, in dem ein aktueller Gewichtungsvektor $w^{(k)}$ berechnet wird, indem eine Linearkombination der gespeicherten Eigenvektoren $w^{(k,1)}$, $w^{(k,2)}$, ... gebildet wird, wobei jeder der Eigenvektoren $w^{(k,1)}$, $w^{(k,2)}$, ... in die Linearkombination mit einem von seinem in Schritt 18 erhaltenen Eigenwert oder dessen Betrag abhängigen Gewicht eingeht. Eine Normierung der Linearkombination ist möglich. Durch diese Gewichtung bei der Bildung der Linearkombination ist gewährleistet, daß diejenigen Übertragungswege, die kurzfristig die besten Übertragungseigenschaften aufweisen, das von der Basisstation abgestrahlte Downlink-Signal dominieren. Die anderen in den aktuellen Gewichtungsvektor $w^{(k)}$ eingehenden Eigenvektoren dienen der Absicherung, daß auch in dem Falle, daß der am höchsten gewichtete Übertragungsweg von einem Zeitschlitz auf den nächsten ausfällt, ein brauchbares Signal bei der Teilnehmerstation ankommt.

Falls einer der Übertragungswege zwischen Basisstation und Teilnehmerstation eine Direktverbindung ist, so kann der diesem Übertragungsweg zugeordnete Eigenvektor unmittelbar als aktueller Gewichtungsvektor $w^{(k)}$ verwendet werden, mit anderen Worten alle anderen Eigenvektoren gehen mit Koeffizienten 0 in die Bildung der Linearkombination ein.

Einer Weiterentwicklung der zweiten Ausgestaltung zufolge kann am Downlink-Signal eine Space-Time-Block-Codierung durchgeführt werden, wodurch z. B. aus einer ursprünglichen Sendesymbolfolge zwei zueinander orthogonale Folgen mit gleichem Informationsgehalt erhalten werden. Jede dieser Folgen wird von der Basisstation gewichtet mit einem der Eigenvektoren ausgestrahlt, deren Eigenwerte sich in Schritt 17 als die größten herausgestellt haben.

## Patentansprüche

1. Verfahren zur Strahlformung in einem Funk-Kommunikationssystem mit Teilnehmerstationen (MSk, MS1 bis MSn) und einer Basisstation (BS), die eine Antenneneinrichtung (AE) mit mehreren Antennenelementen ($A_1$ bis $A_M$) aufweist, die ein Downlinksignal jeweils gewichtet mit Koeffizienten $w_i$, i=1, ..., M eines aktuellen Gewichtungsvektors w abstrahlen, bei dem

   a) in einer Initialisierungsphase eine Mehrzahl von ersten Gewichtungsvektoren $w^{(j)}$ ermittelt werden, und **dadurch gekennzeichnet, dass**:
   b) in einer Arbeitsphase der für die Ausstrahlung eines Zeitschlitzes des für die Teilnehmerstation (MSk) bestimmten Downlinksignals verwendete aktuelle Gewichtungsvektor w anhand der ermittelten ersten Gewichtungsvektoren zyklisch neu festgelegt wird, wobei die ersten Gewichtungsvektoren $w^{(j)}$ zueinander orthogonal gewählt werden.

2. Verfahren nach Anspruch 1, **dadurch gekennzeichnet, dass** die ersten Gewichtungsvektoren anhand von Messungen der Downlink-Übertragung ermittelt werden.

3. Verfahren nach Anspruch 1, **dadurch gekennzeichnet, dass** die ersten Gewichtungsvektoren anhand von Messungen der Uplink-Übertragung ermittelt werden.

4. Verfahren nach Anspruch 2 oder 3, **dadurch gekennzeichnet, dass** eine erste räumliche Kovarianzmatrix des Downlink- bzw. Uplink-Signals erzeugt wird, und daß die ersten Gewichtungsvektoren unter den Eigenvektoren dieser ersten räumlichen Kovarianzmatrix gewählt werden.

5. Verfahren nach Anspruch 4, **dadurch gekennzeichnet, dass** für jeden Tap des Downlink- bzw.

Uplink-Signals kurzfristige Kovarianzmatrizen gebildet werden (11) und die erste räumliche Kovarianzmatrix durch Mittelung (12) der kurzfristigen Kovarianzmatrizen über alle Taps erhalten wird.

6. Verfahren nach Anspruch 5, **dadurch gekennzeichnet, daß** die kurzfristigen Kovarianzmatrizen $(\overline{R_{xx}})_i$ jeweils aus einer sich über einen Zeitschlitz erstreckenden Messung des Downlink bzw. Uplink-Signals erhalten werden.

7. Verfahren nach Anspruch 6, **dadurch gekennzeichnet, dass** die erste räumliche Kovarianzmatrix $(\overline{R_{xx}})$= eine langfristige Kovarianzmatrix ist, die durch Mittelung der kurzfristigen Kovarianzmatrizen über eine Mehrzahl von Zeitschlitzen (13) erhalten wird.

8. Verfahren nach einem der Ansprüche 4 bis 6, **dadurch gekennzeichnet, dass** als erste Gewichtungsvektoren die Eigenvektoren der ersten räumlichen Kovarianzmatrix gewählt werden, deren Eigenwerte die größten Beträge aufweisen (14, 15).

9. Verfahren nach einem der vorhergehenden Ansprüche, **dadurch gekennzeichnet, dass** zyklisch eine zweite räumliche Kovarianzmatrix erzeugt wird (17), daß Eigenwerte der zweiten räumlichen Kovarianzmatrix für die ersten Eigenvektoren berechnet werden (18), und daß der aktuelle Gewichtungsvektor anhand der Eigenwerte festgelegt wird.

10. Verfahren nach einem der vorhergehenden Ansprüche, **dadurch gekennzeichnet, dass** die zweiten räumlichen Kovarianzmatrizen mit den kurzfristigen Kovarianzmatrizen identisch sind.

11. Verfahren nach einem der vorhergehenden Ansprüche, **dadurch gekennzeichnet, dass** der aktuelle Gewichtungsvektor unter den ersten Gewichtungsvektoren ausgewählt wird (19).

12. Verfahren nach einem der Ansprüche 1 bis 10, **dadurch gekennzeichnet, dass** der aktuelle Gewichtungsvektor eine Linearkombination der ersten Gewichtungsvektoren ist (20).


**Claims**

1. Method for beam shaping in a radio communication system comprising subscriber stations (MSk, MS1 to MSn) and a base station (BS) which has an antenna apparatus (AE) with a plurality of antenna elements ($A_1$ to $A_M$) which radiate a downlink signal in each case weighted with coefficients $w_i$, i = 1, ..., M of a current weighting vector w, in which

a) a plurality of first weighting vectors $w^{(j)}$ are found in an initialization phase, and **characterized in that**
b) the current weighting vector w, used for radiating a time slot of the downlink signal intended for the subscriber station (MSk), is cyclically redetermined in an operating phase by means of the first weighting vectors found, the first weighting vectors $w^{(j)}$ being selected to be orthogonal to one another.

2. Method according to Claim 1, **characterized in that** the first weighting vectors are found by means of measurements on the downlink transmission.

3. Method according to Claim 1, **characterized in that** the first weighting vectors are found by means of measurements on the uplink transmission.

4. Method according to Claim 2 or 3, **characterized in that** a first spatial covariance matrix of the downlink or, respectively, uplink signal is generated and **in that** the first weighting vectors are selected from among the eigenvectors of this first spatial covariance matrix.

5. Method according to Claim 4, **characterized in that** short-term covariance matrices are formed (11) for each tap of the downlink or, respectively, uplink signal and the first spatial covariance matrix is obtained by averaging (12) the short-term covariance matrices over all taps.

6. Method according to Claim 5, **characterized in that** the short-term covariance matrices $(\overline{R_{xx}})_i$ are in each case obtained from a measurement, extending over one time slot, of the downlink or, respectively, uplink signal.

7. Method according to Claim 6, **characterized in that** the first spatial covariance matrix $(\overline{R_{xx}})_z$ is a long-term covariance matrix which is obtained by averaging of the short-term covariance matrices over a plurality of time slots (13).

8. Method according to one of Claims 4 to 6, **characterized in that** the eigenvectors of the first spatial covariance matrix, the eigenvalues of which have the greatest amounts (14, 15), are selected as first weighting vectors.

9. Method according to one of the preceding claims, **characterized in that** a second spatial covariance matrix is cyclically generated (17), **in that** eigenvalues of the second spatial covariance matrix are calculated for the first eigenvectors (18), and **in that** the current weighting vector is defined by means of the eigenvalues.

**10.** Method according to one of the preceding claims, **characterized in that** the second spatial covariance matrices are identical with the short-term covariance matrices.

**11.** Method according to one of the preceding claims, **characterized in that** the current weighting vector is selected from among the first weighting vectors (19).

**12.** Method according to one of Claims 1 to 10, **characterized in that** the current weighting vector is a linear combination of the first weighting vectors (20).

**Revendications**

**1.** Procédé de formation de faisceau dans un système de radiocommunication comportant des stations d'abonnés (MSk, MS1 à MSn) et une station de base (BS) laquelle présente un dispositif d'antenne (AE) avec plusieurs éléments d'antenne ($A_1$ à $A_M$) qui émettent un signal downlink à chaque fois pondéré avec des coefficients $w_i$, i=1, ..., M d'un vecteur de pondération actuel w, dans lequel

a) dans une première phase d'initialisation, une pluralité de premiers vecteurs de pondération $w^{(j)}$ est déterminée, et **caractérisé en ce que**
b) dans une phase de travail, le vecteur de pondération actuel w, utilisé pour l'émission d'un intervalle temporel du signal downlink destiné à la station d'abonné (MSk), est redéfini de manière cyclique à l'aide des premiers vecteurs de pondération déterminés, les premiers vecteurs de pondération $w^{(j)}$ étant choisis orthogonaux entre eux.

**2.** Procédé selon la revendication 1, **caractérisé en ce que** les premiers vecteurs de pondération sont déterminés à l'aide de mesures de la transmission downlink.

**3.** Procédé selon la revendication 1, **caractérisé en ce que** les premiers vecteurs de pondération sont déterminés à l'aide de mesures de la transmission uplink.

**4.** Procédé selon la revendication 2 ou 3, **caractérisé en ce qu'**une première matrice de covariance spatiale du signal downlink resp. uplink est générée et **en ce que** les premiers vecteurs de pondération sont choisis parmi les vecteurs propres de cette première matrice de covariance spatiale.

**5.** Procédé selon la revendication 4, **caractérisé en ce que** pour chaque tap du signal downlink resp. uplink des matrices de covariance à court terme sont formées (11) et **en ce que** la première matrice de covariance spatiale est obtenue en calculant la moyenne (12) des matrices de covariance à court terme sur tous les taps.

**6.** Procédé selon la revendication 5, **caractérisé en ce que** les matrices de covariance à court terme $(\overline{R_{xx}})_i$ sont obtenues à chaque fois à partir d'une mesure du signal downlink resp. uplink, s'étendant sur un intervalle temporel.

**7.** Procédé selon la revendication 6, **caractérisé en ce que** la première matrice de covariance spatiale $(\overline{R_{xx}})_z$ est une matrice de covariance à long terme, obtenue en calculant la moyenne des matrices de covariance à court terme sur une pluralité d'intervalles temporels (13).

**8.** Procédé selon l'une des revendications 4 à 6, **caractérisé en ce que** comme premiers vecteurs de pondération les vecteurs propres de la première matrice de covariance spatiale sont choisis, dont les valeurs propres présentent les plus grands montants.

**9.** Procédé selon l'une des revendications précédentes, **caractérisé en ce qu'**une seconde matrice de covariance spatiale est générée de manière cyclique (17), **en ce que** des valeurs propres de la seconde matrice de covariance spatiale sont calculées pour les premiers vecteurs propres (18) et **en ce que** le vecteur de pondération actuel est déterminé à l'aide des valeurs propres.

**10.** Procédé selon l'une des revendications précédentes, **caractérisé en ce que** les secondes matrices de covariance spatiales sont identiques aux matrices de covariance à court terme.

**11.** Procédé selon l'une des revendications précédentes, **caractérisé en ce que** le vecteur de pondération actuel est choisi parmi les premiers vecteurs de pondération (19).

**12.** Procédé selon l'une des revendications 1 à 10, **caractérisé en ce que** le vecteur de pondération actuel est une combinaison linéaire des premiers vecteurs de pondération (20).

Fig. 1

BS

M1

M3

M2

MS

# Fig. 2

$R_{xx,a,i}$    11

$R_{xx,i}$    12

$$\left(\overline{R_{xx}}\right)_i = \rho\left(\overline{R_{xx}}\right)_{i-1} + (1-\rho)R_{xx,i}$$    13

Initialisierungsphase

Eigenwertanalyse    14

15    Eigenvektoren
speichern

Übertragen
an BS    16

Arbeitsphase

$R_{xx,i}$    17

Eigenwerte
bestimmen    18

19    Nummer des dominanten Eigenvektors an BS
übertragen

Fig. 3

11 — $R_{xx,a,i}$

$R_{xx,i}$ — 12

$$\overline{(R_{xx})}_i = \rho\overline{(R_{xx})}_{i-1} + (1-\rho)R_{xx,i}$$ — 13

Initialisierungsphase

Eigenwertanalyse — 14

15 — Eigenvektoren
speichern

Arbeitsphase

$R_{xx,i}$ — 17

Eigenwerte
bestimmen — 18

20 — Linearkombinationen
bilden

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032426
- US 5886988 A

- DE 19803188